# EUROPÄISCHE PATENTSCHRIFT

(11) **EP 1 109 694 B1**
(45) Veröffentlichungstag und Bekanntmachung des Hinweises auf die Patenterteilung: **06.04.2005**
(21) Anmeldenummer: 00952860.5
(22) Anmeldetag: 21.06.2000
(51) Int. Cl.: B60N 2/02, B60N 2/06

(54) **VORRICHTUNG ZUR ELEKTRISCHEN LÄNGSVERSTELLUNG VON KRAFTFAHRZEUGSITZEN**
DEVICE FOR ELECTRICAL LONGITUDINAL ADJUSTMENT OF SEATS IN A MOTOR VEHICLE
DISPOSITIF POUR LE REGLAGE LONGITUDINAL ELECTRIQUE DE SIEGES D'AUTOMOBILES

(30) Priorität: 09.07.1999 DE 19932046
(43) Veröffentlichungstag der Anmeldung: 27.06.2001
(73) Patentinhaber: ROBERT BOSCH GMBH, 70442 Stuttgart (DE)
(72) Erfinder: URSEL, Eckhard, D-77815 Buehl (DE); GENTER, Gerhard, D-77855 Achern (DE); WINTER, Manfred, D-77839 Lichtenau (DE); HAUSSECKER, Walter, D-77830 Buehlertal (DE); SCHILLER, Herbert, D-77830 Buehlertal (DE); MAENNLE, Erik, D-77704 Oberkirch (DE); HARTZ, Guenter, D-77830 Buehlertal (DE); WOLF, Joerg, D-76139 Karlsruhe (DE); PROHASKA, Werner, D-77833 Ottersweier (DE); STEUER, Martin, D-77830 Buehlertal (DE); LINDE, Hansjuergen, D-96450 Coburg (DE); NEUMANN, Uwe, D-96050 Bamberg (DE); REHKLAU, Andreas, D-96450 Coburg (DE)
(86) Internationale Anmeldenummer: PCT/DE2000/002029
(87) Internationale Veröffentlichungsnummer: WO 2001/003966

(56) Entgegenhaltungen:
- DE-C- 3 642 441
- FR-A- 2 406 408
- US-A- 5 314 158

## Beschreibung

### Stand der Technik

Die Erfindung betrifft eine Vorrichtung zur elektrischen Längsverstellung von Kraftfahrzeugsitzen nach der Gattung des Hauptanspruchs.

Herkömmliche Vorrichtungen basieren darauf, daß mindestens eine am Sitzgestell angebrachte Oberschiene in mindestens einer damit verbundenen, fest an einem Karosserieteil des Fahrzeugs angebrachten Unterschiene verschiebbar geführt ist. Die Verschiebung der Oberschiene relativ zur Unterschiene erfolgt häufig mit Hilfe einer sich drehenden, ortsfesten Gewindespindel, die mit einer in der Oberschiene gelagerten und mit der Gewindespindel zusammenwirkenden Gewindemutter verbunden ist. Die Gewindespindel wird dabei von einer Elektromotor-Getriebeeinheit angetrieben.

Eine andere und häufig benutzte Möglichkeit zur Sitzlängsverstellung basiert auf dem Zahnstangenprinzip, bei dem die Zähne einer mit der Oberschiene verbundenen Zahnstange mit den Zähnen eines mit der Unterschiene verbundenen Ritzels zusammenwirken. Durch die Drehung des ortsfesten Ritzels verschiebt sich die Zahnstange bzw. die Oberschiene und somit der Fahrzeugsitz in seiner Längsrichtung.

Ein Problem bei diesen gängigen Prinzipien ist, dass die Toleranzen der zusammenwirkenden Bauteile möglichst klein gewählt werden müssen, damit die Verstellbewegung nicht ruckartig, sondern möglichst kontinuierlich erfolgt. Dieses Erfordernis der minimalen Toleranzen bedeutet einen sehr hohen technischen Aufwand bei der Fertigung dieser Stellantriebe.

Mit der US 5,314,158 ist eine gattungsgemäße elektrische Sitzverstellvorrichtung bekannt geworden, bei der eine mit dem Sitz verbundene Oberschiene gegenüber einer karosseriefesten Unterschiene verschiebbar angeordnet ist. Dabei wird mittels eines Elektromotors eine in der Oberschiene gelagerte Spindel angetrieben, die mit einer Gewindemutter zusammenwirkt, die fest mit der Unterschiene verbunden ist.

### Vorteile der Erfindung

Die erfindungsgemäße Vorrichtung mit den Merkmalen des Hauptanspruchs hat den Vorteil, dass damit eine äußerst gleichmäßige Verstellbewegung ermöglicht wird, und gleichzeitig die Anforderungen an die Fertigungstoleranzen im Vergleich zu den auf den gängigen Prinzipien basierenden Stellantrieben wesentlich geringer sind. Darüber hinaus werden die mit den diskontinuierlichen Bewegungsabläufen verbundenen Geräuschentwicklungen vermieden.

Der Erfindungsgedanke besteht darin, dass die Bewegung der Oberschiene relativ zur Unterschiene durch eine mit der Oberschiene verbundene Welle bewirkt wird, die von einem Elektromotor antreibbar ist. Die Welle ist drehfest mit Exzentern verbunden, die in mittelbaren oder unmittelbaren Kontakt mit der Unterschiene bringbar sind. Durch die sich auf der Welle drehenden Exzenter und deren Kontakt mit der Unterschiene verschiebt sich der mit der Oberschiene in Verbindung stehende Fahrzeugsitz in Längsrichtung.

Durch die in den Unteransprüchen angegebenen Maßnahmen sind vorteilhafte Weiterbildungen der Vorrichtung nach dem Hauptanspruch möglich.

So ist es von Vorteil, wenn pro am Sitzgestell angebrachter Oberschiene mindestens drei Exzenter nebeneinander und gleichmäßig versetzt zueinander angeordnet sind. Dies gewährleistet eine besonders gleichmäßige Verstellbewegung.

Vorteilhaft ist außerdem, wenn die Exzenter an je einem Verbindungspunkt drehbar mit jeweils einem Hubelement verbunden sind, die entsprechend ihrer versetzten Anordnung abwechselnd in Kontakt mit der Unterschiene zu bringen sind.

Diese drehbare Verbindung der Exzenter mit den Hubelementen erfolgt vorteilhafterweise an jeweils einer im oberen Bereich der Hubelemente eingearbeiteten, kreisförmigen Öffnung, die den jeweiligen Exzenter umgibt.

Um eine möglichst kontinuierliche Bewegung der Oberschiene relativ zur Unterschiene zu ermöglichen ist es erforderlich, daß die Hubelemente einen zweiten Verbindungspunkt mit der Oberschiene aufweisen. Dieser zweite Verbindungspunkt wird von einem in den Hubbalken eingearbeiteten Langloch gebildet, in die ein an der Oberschiene angebrachter Führungszapfen ragt.

Durch die gewählte Fixierung der Hubelemente mit der Oberschiene an den beiden Verbindungspunkten führen diese eine kreisende Vorwärts-Abwärts-Rückwärts-Aufwärts-Bewegung durch, was einer Laufbewegung ähnelt.

Sind die Hubelemente mit Füßen versehen, die eine spezielle Lauffläche aufweisen, dann ist ein vorteilhaftes Abrollen der Hubbalken auf der Unterschiene gewährleistet. Dies erhöht die Kontinuität der Relativbewegung von Oberschiene zu Unterschiene zusätzlich.

Besonders effizient funktioniert die Verstellvorrichtung, wenn die Lauffläche aus einem Material mit einem hohen Reibungskoeffizienten besteht. Dann wird der Schlupf der Antriebsvorrichtung minimiert, der Reibschluß ist besonders hoch und die Gefahr eines Durchrutschens minimal.

Die gleichmäßig versetzte Anordnung der Exzenter bewirkt weiterhin, daß immer mindestens zwei Füße der Hubelemente in Kontakt mit der Unterschiene sind. Dies ist eine wesentliche Voraussetzung für die Kontinuität der Relativbewegung.

Im Hinblick auf die angestrebte kontinuierliche Bewegung und den möglichst geräuscharmen Lauf ist es außerordentlich vorteilhaft, wenn die Krümmung der Lauffläche an die Exzentrizität des Exzenters angepaßt ist. Würde diese Krümmungsanpassung nicht vorliegen, dann würde sich die Lauffläche nicht so gleichmäßig wie gewünscht abrollen.

Weiterhin vorteilhaft ist, wenn die Füße über elastisch deformierbare Verbindungsglieder an die Hubelemente angebunden sind. Diese Verbindungsglieder bestehen vorzugsweise aus einem elastomerartigen Material und sorgen dafür, daß die Laufflächen der Füße möglichst fest und möglichst lange auf die entsprechende Fläche der Unterschiene gepreßt werden. Die Verbindungsglieder können beispielsweise auch durch speziell geführte Federn oder sonstige gummiartige Materialien gebildet werden.

Die Kontinuität der Verschiebebewegung kann durch Verwendung einer größeren Anzahl von nebeneinander angeordneten Hubbalken zusätzlich erhöht werden. So ist beispielsweise vorstellbar, daß nicht nur drei, sondern fünf Hubbalken verwendet werden, die dann im Winkel von 72° zueinander versetzt auf der Exzenterwelle angeordnet sind.

Um zu gewährleisten, daß die jeweiligen Laufflächen in vorhandene Unterschienen passen und somit universell einsetzbar sind, können sie dann entsprechend schmaler ausgeführt sein.

Da der Kraftfahrzeugsitz in der Regel auf einem Schienenpaar geführt ist, ist bei der erfindungsgemäßen Vorrichtung natürlich jede Schiene mit einem Satz von Hubelementen auszustatten. Dabei können die jeweils benachbarten Hubelementanordnungen der beiden Schienensysteme über eine gemeinsame Welle von einem einzigen Motor angetrieben werden. Es ist aber auch vorstellbar, daß jeder Satz von Hubelementen von einem einzelnen Motor angetrieben wird, wobei diese Motoren dann synchronisiert laufen.

Vorstellbar ist auch, daß pro Schienensystem mehrere Hubelementensätze in Reihe geschaltet sind, oder daß jeweils am Anfang bzw. am Ende der Oberschiene ein Hubelementensatz arbeitet.

Die Ansteuerung der Motoren zur elektrischen Verstellung des Fahrzeugsitzes kann auf ganz herkömmliche Weise über Steuergeräte erfolgen, die beispielsweise Mikroprozessoren enthalten und mit manuellen Bedienelementen in Verbindung stehen.

Dabei sind zusätzliche Haltemittel vorteilhaft, die den Fahrzeugsitz bei einer hohen Beschleunigung oder Verzögerung des Fahrzeugs in seiner gewünschten Position sichern.

### Zeichnung

In der Zeichnung sind drei Ausführungsbeispiele einer erfindungsgemäßen Vorrichtung dargestellt und in der nachfolgenden Beschreibung näher erläutert.

Es zeigen
Figur 1 eine perspektivische Darstellung einer erfindungsgemäßen verstellvorrichtung von der Seite,
Figur 2 eine perspektivische Darstellung von vorn,
Figur 3 einen Bewegungsablauf der drei Hubelemente in vier verschiedenen Positionen,
die Figur 4 eine alternative Ausführungsform in perspektivischer Darstellung.

### Beschreibung der Ausführungsbeispiele

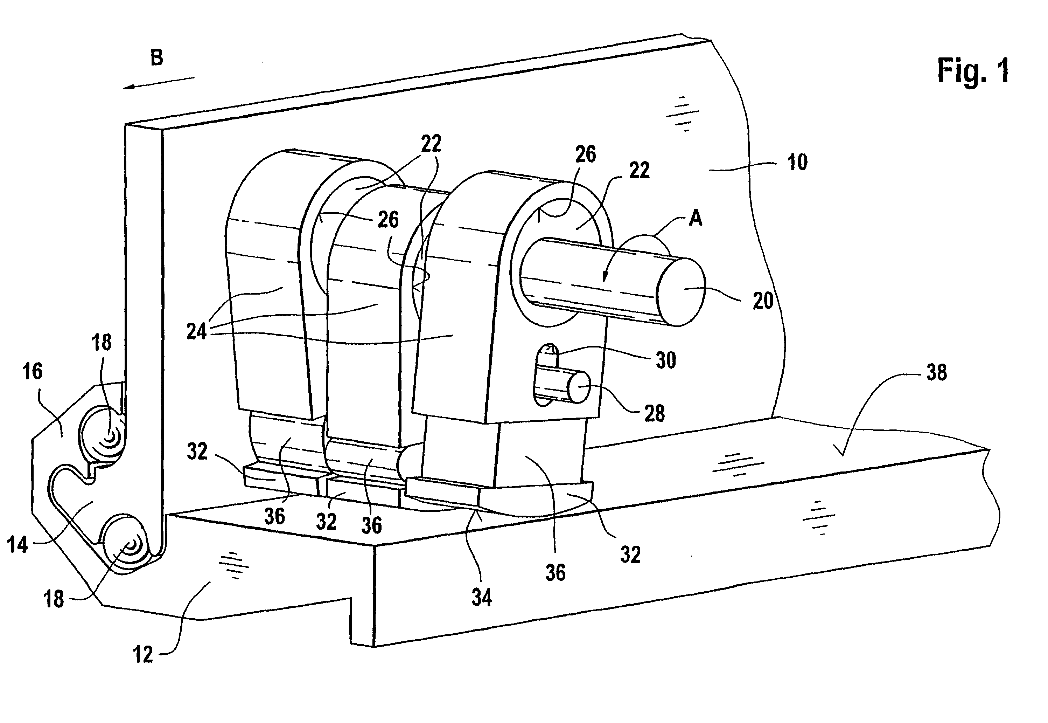

Das in Figur 1 dargestellte Ausführungsbeispiel einer erfindungsgemäßen Vorrichtung zeigt eine Oberschiene 10, die relativ zu einer damit verbundenen Unterschiene 12 verschiebbar geführt ist. Die Oberschiene 10 ist mit einem nicht dargestellten Sitzgestell eines Fahrzeugsitzes fest verbunden. Die Unterschiene 12 ist ebenfalls fest an einem nicht dargestellten Karosserieteil des Fahrzeugs angebracht.

Die Führung der Oberschiene 10 in der Unterschiene 12 erfolgt durch ein an der Oberschiene 10 ausgebildetes Führungsteil 14, das in ein an der Unterschiene 12 ausgebildetes Gegenführungsteil 16 eingepaßt ist.

Die exakte Führung der Oberschiene 10 in der Unterschiene 12 wird durch Gleitelemente 18 erhöht, die im Gegenführungsteil 16 angeordnet sind. Diese Gleitelemente sind Kugeln aus Metall, die von nicht dargestellten Distanzhülsen auf Abstand gehalten werden.

Weiterhin ist eine Welle 20 dargestellt, die an die Oberschiene 10 gekoppelt ist. Mit dieser Welle 20 sind drei nebeneinander angeordnete Exzenter 22 drehfest verbunden. Die drei Exzenter 22 sind jeweils um einem Winkel von 120° zueinander versetzt angeordnet und jeweils mit Hubelementen 24 drehbar verbunden. Die Verbindung erfolgt über eine im oberen Bereich der Hubelemente 24 eingearbeitete kreisförmige Öffnung 26, in der der jeweilige Exzenter 22 drehbar gelagert ist.

Ein weiterer Verbindungspunkt der Hubelemente 24 mit der Oberschiene wird über einen an der Oberschiene 10 angebrachten Führungszapfen 28 hergestellt, der in jeweils ein in die Hubelemente eingearbeitetes Langloch 30 ragt.

Die Hubelemente 24 weisen im unteren Bereich Füße 32 auf, die mit einer Lauffläche 34 versehen sind. Die Füße sind über elastisch deformierbare Verbindungsglieder 36 an die Hubbalken 24 angebunden.

Während der Verschiebebewegung dreht sich die Welle 20 in der eingezeichneten Pfeilrichtung A zusammen mit den Exzentern 22. Die exzentrische Drehbewegung führt dazu, daß sich die Hubelemente 24 mit ihren Laufflächen 34 auf der Gegenlauffläche 38 der Oberschiene 10 abwälzen. Dieses Abwälzen bewirkt aufgrund der beiden Verbindungspunkte eine Verschiebebewegung der Oberschiene 10 relativ zur Unterschiene 12 in Richtung des eingezeichneten Pfeiles B.

Bedingt durch die symmetrisch angeordneten Exzenter 22 in einem Winkel von 120° ist gewährleistet, daß immer mindestens zwei Laufflächen 34 der Hubelemente 24 in Kontakt mit der Gegenlauffläche 38 stehen. Die beiden Tatsachen, daß das elastische Verbindungsglied 36 einen ausreichend hohen Auflagedruck der Lauffläche 34 auf der Gegenlauffläche 38 erzeugt, und daß die Lauffläche aus einem Material mit möglichst hohem Reibungskoeffizienten besteht, sorgen für einen optimalen Reibschluß. Dies garantiert zum einen eine kontinuierliche und ruckfreie Verstellbewegung, zum anderen, daß bei nicht betätigter Welle 20 tatsächlich auch keine Verschiebebewegung und somit auch keine unerwünschte Sitzverstellung stattfindet.

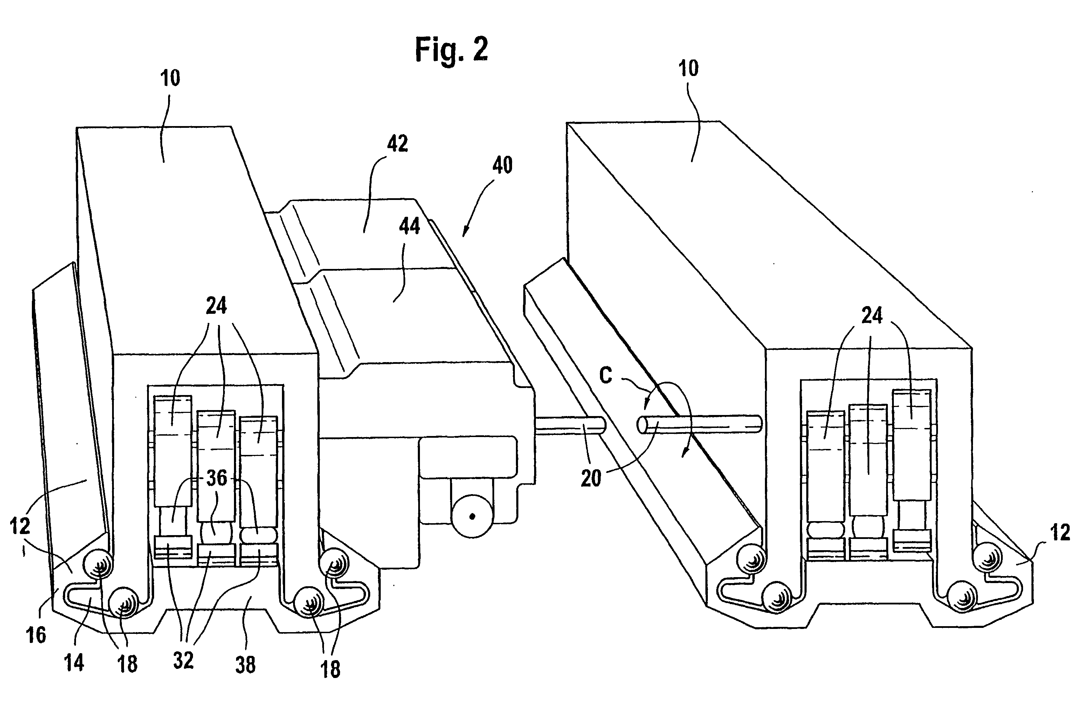

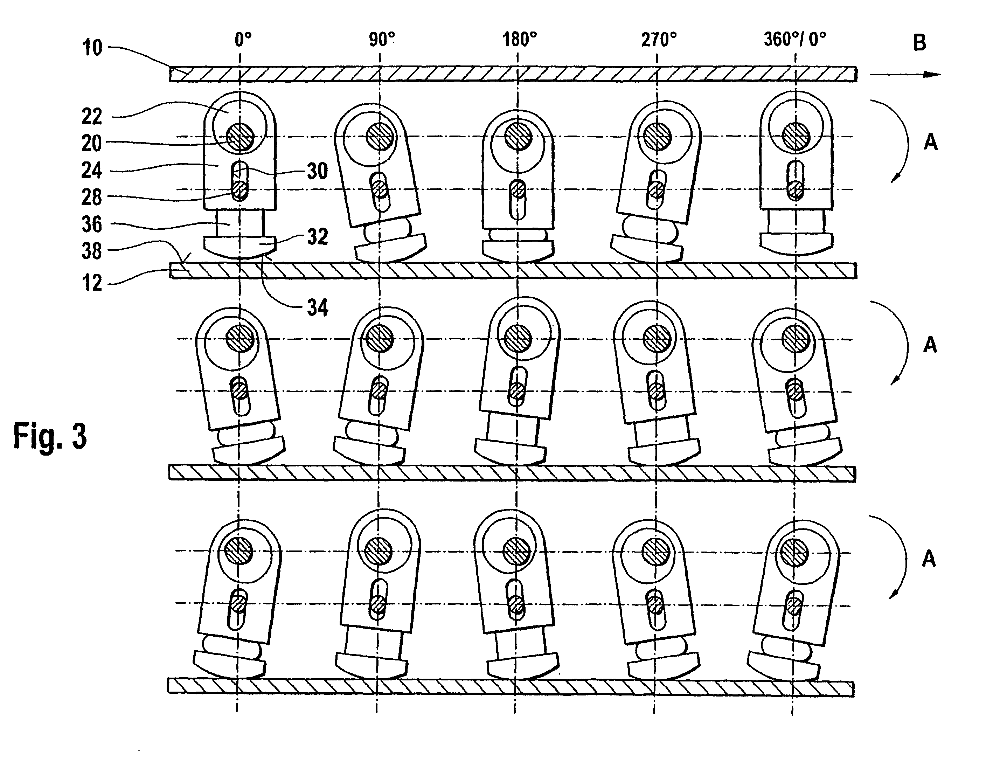

In Figur 2 ist die Verstellvorrichtung perspektivisch in einer Ansicht von vorn dargestellt. Bei dieser Figur werden genau wie in den folgenden Figuren 3 bis 5 für gleiche Positionen wie in Figur 1 gleiche Bezugszahlen verwendet.

Zusätzlich zu den in Figur 1 dargestellten Merkmalen ist in Figur 2 eine Motorgetriebeeinheit 40 dargestellt, die mit der Welle 20 wirkverbunden ist und den Satz von Hubelementen 24 betätigt.

Die Motorgetriebeeinheit 40 in dem dargestellten Ausführungsbeispiel besteht aus einem Elektromotor 42 und einem diesem nachgeordneten Schneckengetriebe 44, mit dem die Welle 20 in beide Richtungen des Doppelpfeiles C und somit auch die Hubelemente 24 angetrieben werden kann.

Die Welle 20 ist mit einem weiteren Satz von Hubelementen 24 einer zweiten, identischen Schienenkonstruktion verbunden. Dieser zweite Satz von Hubelementen 24 wird ebenfalls von der Motorgetriebeeinheit 40 in der schon beschriebenen Weise angetrieben.

Die in Figur 2 dargestellte mechanische Konstruktion ermöglicht es somit einen Sitz, der an seinen beiden Unterseiten mit den beiden Oberschienen 10 verbunden ist, in Längsrichtung der Schienen 10 bzw. 12 in zwei verschiedenen Richtungen ruckfrei und geräuscharm zu verschieben.

In Figur 3 sind die Positionen der drei nebeneinander angeordneten Hubbalken in unterschiedlichen Stellungen der Welle 20 in Intervallen von jeweils 90° fortschreitend dargestellt. Die oberste Folge bezieht sich auf das erste Hubelement, die mittlere Folge auf das zweite Hubelement und die untere Folge auf das dritte Hubelement.

Die Relativbewegung der Oberschiene ist mit dem Pfeil B gekennzeichnet, die Rotationsbewegung der Welle 20 mit dem Pfeil A.

Die wesentliche Aussage von Figur 3 ist, daß zu jedem Zeitpunkt zwei der drei Hubelemente über ihre Laufflächen 34 in Kontakt mit der Unterschiene 12 stehen. Dies ist eine Folge der um 120° versetzt zueinander angeordneten Exzenter 22. Das elastische Verbindungsglied 36 wird je nach Position unterschiedlich stark deformiert und sorgt für einen angemessenen Auflagedruck der Lauffläche 34 auf der Gegenlauffläche 38 der Unterschiene 12. Bedingt durch die Fixierung der Hubelemente 24 an zwei Verbindungspunkten führen diese eine kreisende Vorwärts-Abwärts-Zurück-Aufwärts-Bewegung durch, was bedingt durch die Reibung zwischen Unterschiene 12 und Fuß 32 des Hubbalkens 24 zu einer kontinuierlichen Relativbewegung in Richtung des Pfeiles B zwischen Oberschiene 10 und Unterschiene 12 führt.

Die erfindungsgemäße Vorrichtung ist nicht nur auf das in den Figuren 1 bis 3 beschriebene Ausführungsbeispiel beschränkt, sondern es sind auch einfachere Varianten denkbar.

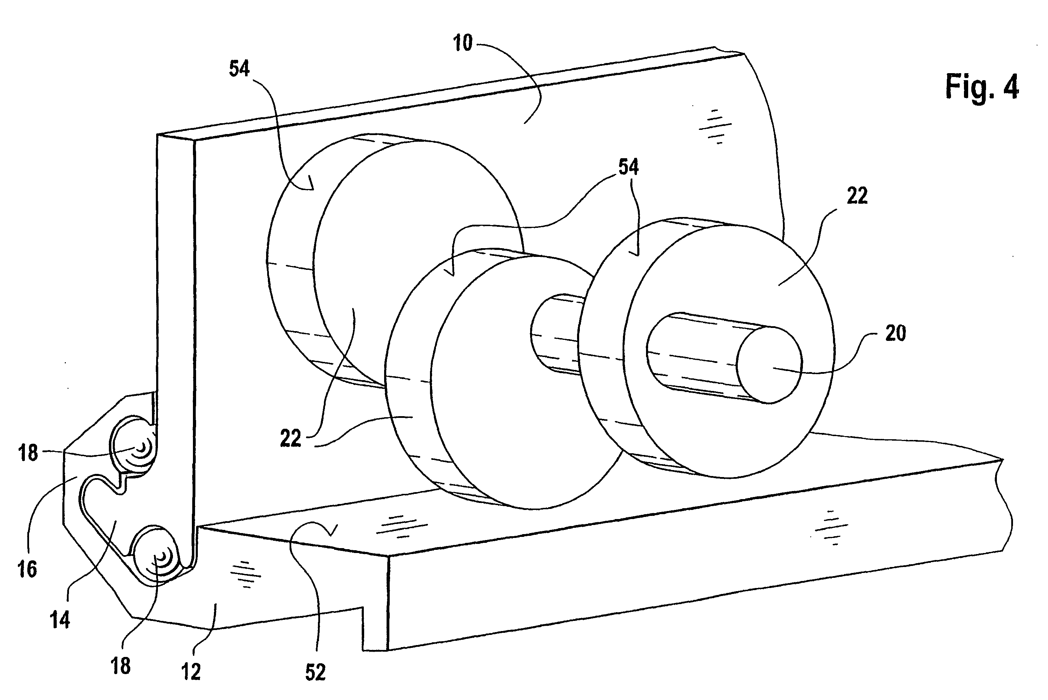

In Figur 4 ist eine alternative Ausführungsform dargestellt, bei der lediglich drei im Winkel von 120° versetzt zueinander angeordnete Exzenter 22 benutzt werden, deren Außenumfangsseiten 54 abwechselnd in reibschlüssigem Kontakt mit einer zweiten Lauffläche 52 der Unterschiene 12 stehen und die Relativbewegung von Oberschiene 10 zu Unterschiene 12 gewährleisten. Auf die Hubelemente 24 wird in dieser einfachen Variante verzichtet.

## Patentansprüche

1. Vorrichtung zur elektrischen Längsverstellung von Kraftfahrzeugsitzen mit mindestens einer am Sitzgestell angebrachten Oberschiene (10), die relativ zu mindestens einer fest an einem Karosserieteil des Fahrzeugs angebrachten Unterschiene (12) verschiebbar geführt ist, weiterhin mit mindestens einer von einem Elektromotor (42) angetriebenen Welle (20), die mit der mindestens einen Oberschiene (10) in Verbindung steht, **dadurch gekennzeichnet, daß**
die mindestens eine Welle (20) drehfest mit Exzentern (22) wirkverbunden ist, die mit der Unterschiene (12) in Kontakt bringbar sind.

2. Vorrichtung nach Anspruch 1, **dadurch gekennzeichnet, daß** die Welle (20) mit mindestens drei nebeneinander und gleichmäßig versetzt zueinander angeordneten Exzentern (22) wirkverbunden ist.

3. Vorrichtung nach Anspruch 1 oder 2, **dadurch gekennzeichnet, daß** die Exzenter (22) an je einem Verbindungspunkt drehbar mit jeweils einem Hubelement (24) verbunden sind.

4. Vorrichtung nach Anspruch 3, **dadurch gekennzeichnet, daß** der Verbindungspunkt von jeweils einer im oberen Bereich des Hubelements (24) eingearbeiteten kreisförmigen Öffnung (26) gebildet wird, in der der jeweilige Exzenter (22) drehbar gelagert ist.

5. Vorrichtung nach Anspruch 3 oder 4, **dadurch gekennzeichnet, daß** die Hubelemente (24) jeweils einen weiteren Verbindungspunkt mit der mindestens einen Oberschiene (10) aufweisen.

6. Vorrichtung nach Anspruch 5, **dadurch gekennzeichnet, daß** der jeweils weitere Verbindungspunkt von einem in das Hubelement (24) eingearbeiteten Langloch (30) gebildet wird, in die ein an der mindestens einen Oberschiene (10) angebrachter Führungszapfen (28) ragt.

7. Vorrichtung nach einem der Ansprüche 3 bis 6, **dadurch gekennzeichnet, daß** die Hubelemente (24) mit Füßen (32) versehen sind, die eine Lauffläche (34) aufweisen.

8. Vorrichtung nach Anspruch 7, **dadurch gekennzeichnet, daß** die Lauffläche (34) aus einem Material mit hohem Reibungskoeffizienten besteht.

9. Vorrichtung nach Anspruch 7 oder 8, **dadurch gekennzeichnet, daß** die Krümmung der Lauffläche (34) an die Exzentrizität des Exzenters (22) angepaßt ist.

10. Vorrichtung nach einem der Ansprüche 7 bis 9, **dadurch gekennzeichnet, daß** die Füße (32) über elastisch deformierbare Verbindungsglieder (36) an die Hubelemente (24) angebunden sind.

11. Vorrichtung nach Anspruch 10, **dadurch gekennzeichnet, daß** die Verbindungsglieder (36) aus einem elastomerartigen Material bestehen.

## Claims

1. Device for the electrical longitudinal adjustment of seats in motor vehicles, having at least one upper rail (10) which is fitted on the seat frame and is guided displaceably relative to at least one lower rail (12), which is fitted in a fixed manner on a body part of the vehicle, furthermore having at least one shaft (20) which is driven by an electric motor (42) and is connected to the at least one upper rail (10), **characterized in that** the at least one shaft (20) is operatively connected in a rotationally fixed manner to eccentrics (22) which can be brought into contact with the lower rail (12).

2. Device according to Claim 1, **characterized in that** the shaft (20) is operatively connected to at least three eccentrics (22) which are arranged next to one another and offset uniformly with respect to one another.

3. Device according to Claim 1 or 2, **characterized in that** the eccentrics (22) are connected rotatably to one lifting element (24) in each case at a respective connecting point.

4. Device according to Claim 3, **characterized in that** the connecting point is formed by a circular opening (26) in each case which is incorporated in the upper region of the lifting element (24) and in which the respective eccentric (22) is mounted rotatably.

5. Device according to Claim 3 or 4, **characterized in that** the lifting elements (24) in each case have a further connecting point to the at least one upper rail (10).

6. Device according to Claim 5, **characterized in that** the respectively further connecting point is formed by a slot (30) which is incorporated in the lifting element (24) and into which a guide pin (28) which is fitted on the at least one upper rail (10) protrudes.

7. Device according to one of Claims 3 to 6, **characterized in that** the lifting elements (24) are provided with feet (32) which have a running surface (34).

8. Device according to Claim 7, **characterized in that** the running surface (34) consists of a material having a high coefficient of friction.

9. Device according to Claim 7 or 8, **characterized in that** the curvature of the running surface (34) is matched to the eccentricity of the eccentric (22).

10. Device according to one of Claims 7 to 9, **characterized in that** the feet (32) are connected to the lifting elements (24) via elastically deformable connecting elements (36).

11. Device according to Claim 10, **characterized in that** the connecting elements (36) consist of an elastomer-like material.

## Revendications

1. Dispositif pour le réglage longitudinal électrique de sièges de véhicules automobiles comprenant au moins une glissière supérieure (10) attachée à l'armature du siège, qui est guidée mobile en translation par rapport à au moins une glissière inférieure (12) attachée rigidement à une partie de la carrosserie du véhicule, avec en outre au moins un arbre (20) entraîné par un moteur électrique (42) et en liaison avec l'au moins une glissière supérieure (10),
**caractérisé en ce que**
l'au moins un arbre (20) est fonctionnellement solidaire en rotation avec des excentriques (22) qui peuvent être mis en contact avec la glissière inférieure (12).

2. Dispositif selon la revendication 1,
**caractérisé en ce que**
l'arbre (20) est relié fonctionnellement à au moins trois excentriques (22) disposés l'un à côté de l'autre et décalés régulièrement les uns par rapport aux autres.

3. Dispositif selon la revendication 1 ou 2,
**caractérisé en ce que**
les excentriques (22) sont reliés mobiles en rotation chacun à un élément à course linéaire (24) au droit d'un point de liaison.

4. Dispositif selon la revendication 3,
**caractérisé en ce que**
le point de liaison est formé à chaque fois par une ouverture circulaire (26) pratiquée dans la région supérieure de l'élément à course linéaire (24), et dans laquelle l'excentrique (22) correspondant est monté rotatif.

5. Dispositif selon la revendication 3 ou 4,
**caractérisé en ce que**
les éléments à course linéaire (24) présentent chacun un autre point de liaison avec l'au moins une glissière supérieure (10).

6. Dispositif selon la revendication 5,
**caractérisé en ce que**
l'autre point de liaison est formé par un trou allongé (30) pratiqué dans l'élément à course linéaire (24) et dans lequel est engagé un tourillon de guidage (28) attaché à l'au moins une glissière supérieure (10).

7. Dispositif selon une des revendications 3 à 6,
**caractérisé en ce que**
les éléments à course linéaire (24) sont munis de pieds (32) qui présentent une surface de portée (34).

8. Dispositif selon la revendication 7,
**caractérisé en ce que**
la surface de portée (34) est composée d'une matière à grand coefficient de frottement.

9. Dispositif selon la revendication 7 ou 8,
**caractérisé en ce que**
la courbure de la surface de portée (34) est adaptée à l'excentricité de l'excentrique (22).

10. Dispositif selon une des revendications 7 à 9,
**caractérisé en ce que**
les pieds (32) sont reliés aux éléments à course linéaire (24) par l'intermédiaire d'organes de liaison élastiquement déformables (36).

11. Dispositif selon la revendication 10,
**caractérisé en ce que**
les organes de liaison (36) sont composés d'une matière élastomère.
